(19) Europäisches Patentamt
European Patent Office
Office européen des brevets

(11) **EP 1 945 855 B1**

(12) **EUROPEAN PATENT SPECIFICATION**

(45) Date of publication and mention
of the grant of the patent:
**18.11.2009 Bulletin 2009/47**

(51) Int Cl.:
*D21H 19/42* (2006.01)    *C09D 101/00* (2006.01)
*D21H 21/52* (2006.01)    *D21H 19/82* (2006.01)
*D21H 27/10* (2006.01)

(21) Application number: **07837931.0**

(22) Date of filing: **05.09.2007**

(86) International application number:
**PCT/US2007/019599**

(87) International publication number:
**WO 2008/033283 (20.03.2008 Gazette 2008/12)**

(54) **PAPERBOARD CONTAINING MICROPLATELET CELLULOSE PARTICLES**

PAPPE MIT MIKROPLÄTTCHENFÖRMIGEN CELLULOSETEILCHEN

CARTON RENFERMANT DES PARTICULES DE CELLULOSE EN MICROLAMELLES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **12.09.2006 US 825311 P**

(43) Date of publication of application:
**23.07.2008 Bulletin 2008/30**

(73) Proprietor: **MeadWestvaco Corporation**
**Glen Allen, VA 23060 (US)**

(72) Inventors:
• **ZURAW, Paul, J.**
**Mount Pleasant, SC 29464 (US)**
• **JOHNSON, Mark, A.**
**Wake Forest, North Carolina 27587 (US)**
• **KNOX, David, E.**
**Goose Creek, South Carolina 29445 (US)**
• **WAITE, Darrell, M.**
**Raleigh, North Carolina 27610 (US)**

(74) Representative: **Baldwin, Mark et al**
**Coulson & Associates**
**1st Floor Suite**
**5 Newbold Road**
**Rugby**
**Warwickshire CV21 2LQ (GB)**

(56) References cited:
**EP-A- 0 499 578      JP-A- 2004 230 719**
**US-A- 2 006 209**

**Description**

*BACKGROUND*

Papermaking process generally involves passing a dilute aqueous slurry of cellulosic fibers obtained from a headbox onto a moving screen known as a fourdrinier wire to drain water from the slurry through the screen and allow a formation of substantially consolidated fiber mat, then pressing the fiber mat using a size press wherein the major volume of water remaining in the mat is removed by roll nip squeezing, and finally passing the resulting mat through a drying section of a paper machine to have the remaining water removed thermodynamically.

Paper-based product such as paper and paperboard is typically coated to enhance its surface properties. Paper coating often requires complex and expensive equipment and is typically performed off-line from a papermaking process. As a result, the coating step adds a significant cost to production process of paper. Coating weights from about, 9.8 to 29.3g/m$^2$ (2-6 lbs/1000 ft$^2$) are typically demanded to substantially enhance surface properties of the paper. Such high coat weight level is usually required because lower coating weights are typically not uniform enough to provide the desired improvement in surface properties. This relatively high coat weight not only substantially increases the production cost of paper, but also raises the basis weight of the paper and thus the shipping cost of paper.

Paperboard typically has a thickness of greater than 0.3 mm, a caliper range of about 0.3 mm to about 1.2 mm, and a basis weight range of about 120 g/m$^2$ to about 500 g/m$^2$. Paperboard is generally categorized into five grades: solid bleached sulfate, coated unbleached Kraft, clay coated news, folding boxboard, and uncoated recycled boxboard.

When used for packaging applications, it is often desirable that the packaging board has good surface properties for high print quality. Therefore, the packaging board is commonly coated with pigment-based formulation. To impart opacity, the packaging board is typically coated with an opacifying pigment such as titanium dioxide and clay in a pigment binder. The surface gaps between wood fibers are in the range of 50 - 100 $\mu$m, while the size of opaque pigment is less than 1 $\mu$m. In order to fill fiber voids and create a smooth paperboard surface, high levels of opacifying pigment are required which adds significant cost to board production. Additionally, since opacifying pigments are denser than cellulose, they tend to increase the basis weight of the board resulting in higher shipping costs. Furthermore, this means of improving surface print quality is in many cases made at the expense of strength properties of packaging boards such as bending force and tensile stiffness.

There has been a continuing effort to improve surface properties of paperboard e.g. smoothness, opacity, printability without diminishing physical performance and significantly increased production cost. U.S. Patent No. 6,645,616 discloses laminated board having enhanced surface and strength properties suitable for use as beverage carrier or carrier board. The laminated board is produced by laminating lightweight coated unprinted white paper onto unbleached or bleached board substrate. In U.S. Patent Application No. 2003/0,091,762, white top paperboard is produced by laminating thin bleached fiber paper onto unbleached board substrate. These methods require additional steps to paperboard making process such as off-line coating and lamination, thus increasing production cost. U.S. Patent Application No. 2005/0,039,871 discloses the use of multilayer curtain for a one-step coating operation to reduce production cost. Another approach to reduce the production cost is by using low-cost fillers instead of titanium oxide pigment to enhance opacity and surface smoothness. U.S. Patent Application No. 2006/0,065,379 teaches the use of low cost mineral fillers, bleached fiber and binder for the production of white top paperboard. U.S. Patent Application No. 2004/086,626 uses mechanically ground fiber as a low-cost void filler in a coating formulation to produce a fine printing paper. In U.S. Patent No. 4,888,092, pulp fines having a particle size which passes through a 100 mesh screen, containing less than 25% fiber and fiber fragments, and containing at least 50% by weight ray cells is applied as a layer on the surface of a primary paper sheet to enhance the surface smoothness of the paper.

The use of ultrafine fibers to fill fiber voids and create smooth board surface has been explored. PCT Patent Application No. 2004/087,411 and U.S. Patent Application No. 2004/223,040 disclose the application of nanometer diameter electrospun fiber to the board surface. This method is, however, typically too costly for the commercial production of paperboard. Microcrystalline cellulose (MCC) has been used to fill surface voids and provide a smooth surface (U.S. Patent No. 7,037,405; U.S. Patent Application No. 2005/2,39,744; PCT Patent Application No. 2006/034,837). U.S. Patent No. 7,037,405 discloses that paperboard surface treated with texturized MCC suspension showed improved strength and surface printability. The disclosed texturized MCC is produced through acid hydrolysis of low-grade fiber pulps such as southern pines and other chemical softwoods, followed by mechanical defibrillation. However, MCC is quite expensive to produce since this type of texturized MCC is essentially isolated and purified from acid pre-extracted cellulosic fibers having high $\alpha$-cellulose content. The MCC suspension must be formulated into suspension with starch or other viscosity modifier in order to control the rheology, so that the suspension could be applied to the paper and paperboard surface.

Microfibrillated cellulose (MFC) has been investigated for surface treatment of paperboard to improve surface characteristics. PCT Patent Application NO. 2004/055,267 teaches the use of MFC obtained from enzymatic treatment of fibers for improving surface printability of packaging materials without deteriorating strength properties. However, the obtained enzymatic MFC suspension is unstable and must be dispersed and stabilized with carboxymethylcellulose. Furthermore, carboxymethylcellulose is required to improve the rheology property of MFC suspension so that the MFC suspension could be coated to the dried surface of packaging materials. U.S. Patent Nos. 4,861,427 and 5,637,197 teach the use of bacterial cellulose MFC for surface treatment application. Similar to MCC, MFC is relatively costly. Currently, it is still a challenge to produce MFC in production scale.

U.S. Patent No. 4,474,949 discloses microfibrillar cellulose in the form of discrete platelets, also known as microplatelet cellulose particles (MPC). These MPC particles are produced by mechanically treating (beating) a dilute aqueous dispersion of cellulose fibers to a degree such that at least the outermost of the secondary walls of cellulose fibers are essentially completely disintegrated to microfibrillar form. The beaten dispersion is then freeze dried. The obtained MPC particles have high absorption capacity and fluid retention, rendering them suitable for use in absorbent products such as sanitary napkins, diapers, dressings or the like which are used for absorbing body fluids.

Japanese Patent Application No. 2004/230,719 discloses MPC having a width of 1-50 $\mu$m, a length of 1-50 $\mu$m and a thickness of 0.1-10 $\mu$m. These easily oriented and uniformly dispersed MPC particles are obtained by grinding cellulose substance. A mixture of synthetic polymer, fatty acid, and water or an organic solvent can be mechanically ground with the cellulose substance. The synthetic polymers can be polyalcohol, polyether, polyolefin, and polyamide. Organic solvent suitable for the grinding process include alkane, alcohol, ketone, ether and aromatic hydrocarbon. Since the obtained MPC particles are tasteless and odorless, they can be used as food additive for enhanced thickening, improved water retention, and increased tactile feeling. Furthermore, they can be used as fillers in drugs and cosmetics.

Since the amount of pigment used for coating is generally related to the smoothness of the substrate over which it is coated. Several means have been used to increase the smoothness of paperboard and, therefore, decrease the amount of opacity pigment needed. Either dry or wet calendering provides paperboard with enhanced surface smoothness. During calendering, the paperboard structure is compressed resulting in a reduced thickness (i.e., lower caliper). The relationship between caliper and bending stiffness is reported as an equation:

$$S^b = t^3 \times E / 12$$

wherein $S^b$ is the bending stiffness;

E is the elastic modulus; and

t is the thickness or caliper.

Bending stiffness property of paperboard is directly related to a cube of the board thickness. Improving the surface smoothness of paperboard through calendering leads to a reduction of caliper thickness, and thus a significant reduction of bending stiffness, Additionally, wet calendering frequently results in machine speed reductions due to the need to re-wet and re-dry the board.

For packaging applications, it is desirable to have paperboard having several performances in addition to surface smoothness for high print quality and aesthetic appearance, such as high bending stiffness and excellent strength.

High bending stiffness provides a rigid and strong packaging board. Furthermore, high bending stiffness is necessary for good runnability on packaging machinery, particularly for high speed printing and converting. It is also valued in paperboard beverage carriers, such as in milk or juice cartons, to prevent bulge. Several methods have been used to enhance the bending stiffness of paperboard, but these improvements are typically at an expense of other board properties. Bulking agents may be added to paperboard to improve bending stiffness. However, bulking agents also impart lower tensile strength to paperboard because of debonding effect of these materials.

When used for packaging applications, it is desirable for the paperboard to have high strength. A typical approach to enhance strength property of packaging board results in an undesirable increase of board density. U.S. Patent No. 6,322,667 teaches the use of superheated steam to improve dry tensile and strength of board without substantially increased board density. Board is dried in superheated steam rather than dried in air or as done conventionally, in air on a hot metal surface. Nevertheless, this method is rather sensitive towards types of pulps used for the board production. Board made of pure mechanical pulps shows significantly improved dry tensile and strength without increased board density. On the contrary, board made of pure chemical pulps such as kraft does not show any increase in strength after drying in superheated steam.

Unfortunately, efforts to enhance one performance of packaging board are commonly achieved at an expense of other desired performance. For example, calendering improves surface smoothness of paperboard but deteriorates bending stiffness and strength.

Therefore, there is still a need for packaging board having enhanced surface smoothness and other aesthetic properties without compromising bending stiffness and strength and vice versa. Additionally, it is beneficial for a method of imparting enhanced surface smoothness and other aesthetic properties, bending stiffness, or strength to packaging boards, while maintaining other desired performances.

## SUMMARY

In one aspect the invention provides a paperboard including microplatelet cellulose particles positioned on at least one surface of the paperboard, wherein the microplatelet cellulose particles have a volume average particle size range of from 20 $\mu$m to 150 $\mu$m, a number average particle size range of from 5 $\mu$m to 20 $\mu$m, and a 95th percentile volume average particle size of no more 300 $\mu$m.

In another aspect the invention provides a paperboard including:

(i) a base paper; and
(ii) at least one layer positioned on at least one surface of the base paper, wherein the layer comprises microplatelet cellulose particles having a volume average particle size range of from 20 $\mu$m to 150 $\mu$m, a number average particle size range of from 5 $\mu$m to 20 $\mu$m, and a 95th percentile volume average particle size of no more 300 $\mu$m.

In another aspect the invention provides a paperboard comprising:

(i) a base paper;
(ii) at least one layer positioned on at least one surface of the base paper, wherein the layer includes microplatelet cellulose particles having a volume average particle size range of from 20 $\mu$m to 150 $\mu$m, a number average particle size range of from 5 $\mu$m to 20 $\mu$m, and a 95th percentile volume average particle size of no more 300 $\mu$m; and
(iii) a coating layer including an opacifying pigment, formed on a surface of the layer (ii).

In another aspect the invention provides a coating composition comprising microplatelet cellulose particles, wherein the microplatelet cellulose particles have a volume average particle size range of from 20 $\mu$m to 150 $\mu$m, a number average particle size range of from 5 $\mu$m to 20 $\mu$m, and wherein about 95% of the microplatelet cellulose particles have a volume average particle size range of from 50 $\mu$m to 300 $\mu$m.

Such paperboard containing microplatelet cellulose particles has improved surface smoothness, aesthetic properties, bending stiffness and strength performance. When microplatelet cellulose particles are used for surface treatment of the paperboard, the microplatelets fill voids between fibers on the board surface. As a result, treated board has enhanced strength and surface properties such as smoothness, opacity, coating hold-out, and printability without compromising bending stiffness. Furthermore, such particles can be used in a process for improving board strength, surface smoothness and/or bending stiffness without the need for densification, while maintaining other desired performances.

## BRIEF DESCRIPTION OF THE DRAWINGS

FIG.1 is a SEM image of the microplatelet cellulose particles (MPC) of the present disclosure.
FIG.2 is another SEM image of the microplatelet cellulose particles (MPC) of the present disclosure.
FIG.3 shows microscopy images at 6x magnifications of the DSF handsheets applied as a secondary layer at different levels of MPC particles, 0, 6.84 and 13.67g/m$^2$ (0, 1.4, and 2.8 lb/1,000 ft$^2$).
FIG. 4 shows SEM surface negative images at 200x magnification of paperboard having softwood base layer, and secondary layer containing (A) no MPC particles, and (B) MPC particles at 4.88g/m$^2$ (1 lb/1,000ft$^2$) in which MPC particles were added in the secondary head during the papermaking process.
FIG. 5 shows SEM cross section negative images at 200x magnification of paperboard having softwood base layer, and secondary layer containing (A) no MPC particles, and (B) MPC particles at 4.88g/m$^2$ (1 lb/1,000ft$^2$) in which MPC particles were added in the secondary head during the papermaking process.
FIG. 6 is a graph showing a relationship between brightness and smoothness of paperboard containing MPC particles of the present disclosure.
FIG 7. is a graph showing a relationship between Sheffield smoothness and Taber stiffness of the paperboards size press-applied with different sizing formulations and calendered at different pressure levels: 0, 8,750 and 17,500N/m (0, 50, and 100 pli).
FIG 8. is a graph showing a relationship between Sheffield smoothness and Taber stiffness of the paperboards blade-coated with different coating formulations and calendered at different pressure levels: 0, 8,750 and 17,500N/m (0, 50, and 100 pli).

*DETAILED DESCRIPTION*

The following detailed description illustrates an embodiment of the present disclosure; however, it is not intended to limit the scope of the appended claims in any manner.

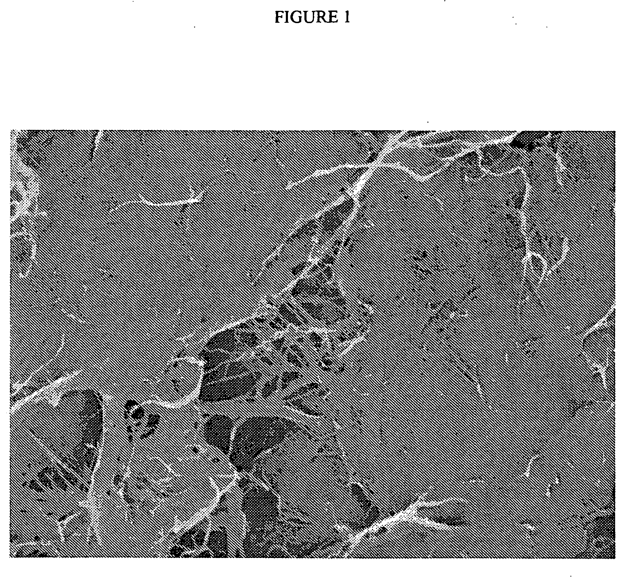

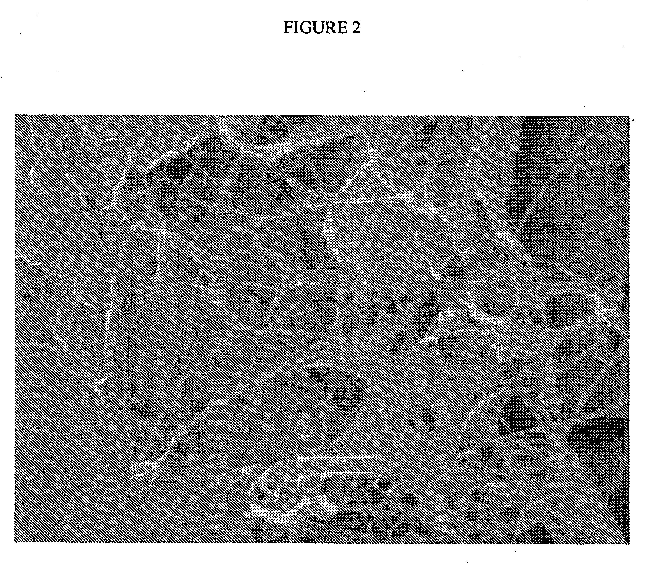

The microplatelet cellulose MPC particles of the present disclosure may be obtained by passing a suspension of fiber pulps through a high-friction grinder or buhrstone mill under an atmospheric pressure at a temperature range of 20°C to 95°C. The fiber pulps were repeatedly subjected to the grinding process for multiple times, and the volume average particle sizes of the resulting MPC in aqueous suspension were measured after each pass using Microtrac X-100 Tri-Laser-System, a laser light scattering particle size analyzer. FIGs. 1 and 2 are the SEM images of the disclosed dried form of MPC.

The MPC of the present disclosure has a volume average particle size range of from 20 $\mu$m to 150 $\mu$m, a number average particle size range of from 5 $\mu$m to 20 microns, and a 95$^{th}$ percentile volume average particle size of no more than 300 $\mu$m. The 95$^{th}$ percentile volume average particle size is defined as the volume average particle size of 95% of total MPC. The particle size of the disclosed MPC may be varied, depending on the targeted end use applications. The concentration of MPC particles can be typically 2% to 3% solids, but a higher or lower % solid may be produced according to the selected applications.

The water retention value of MPC was determined by placing 50 ml of 1.5% solids aqueous solution of MPC in a centrifuge tube at room temperature. The tubes used were 30 mm in diameter x 100 mm in length with a scaled volume of 50 ml. The filled tubes were centrifuged for 15 min at 3000 rpm using a IEC CL2 centrifuge (1500 G). The tubes were carefully removed from the centrifuge, and the volume at the interface between the clear aqueous phase and opaque MPC layer was measured. The water phase was then decanted off and the MPC layer was dried in an oven at 105°C for 48 hours to determine the weight of MPC. The water retention value was calculated using the following equation:

$$\text{Water retention value} = \text{ml (volume of precipitate in tube)} / \text{g (O.D. weight of MPC)}$$

The MPC of the present invention may have a water retention value in a range of from 5 ml/g to 80 ml/g, for example.

Cellulosic fibers from various natural origins may be used in the present disclosure. These include, but are not limited to, softwood fibers, hardwood fibers, cotton fibers, Esparto grass, bagasse, hemp, flax and vegetable-based fiber such as sugar beet and citrus pulp. Wood pulps may be made by chemical treatment such as Kraft, sulfite, and sulfate processes; mechanical pulps such as groundwood and thermomechanical pulp; and combination thereof. The fiber pulps may be modified before being subjected to a high friction grinding process. Several modifications may be applied including, but are not limited to, chemical modification, enzymatic treatment, mechanical treatment, and combinations thereof. Furthermore, synthetic fibers and/or fillers such as clay or titanium dioxide may be subjected to a high friction grinder in combination with fiber pulps.

MPC particles of the present disclosure may be used for surface treatment of board and/or for secondary layer in the basecoat of board. The surface treatment may be carried out by various techniques known in the arts. These include, but are not limited to, size-press, roll coating, blade coating, rod coating, spraying, curtain coating, and surface layer forming by headbox on paperboard machine.

In one embodiment of the present disclosure, the disclosed paperboard contains MPC in an amount range of from 0.48g/m to 97.6g/m (about 0.10 lbs to about 20 lbs per 1,000 ft$^2$) of the paperboard.

In one embodiment of the present disclosure, the disclosed paperboard contains MPC in an amount range of from 0.1 % to 50%, based on total weight of the paperboard.

In one embodiment of the present disclosure, the disclosed paperboard containing MPC has a MD-CD geometric mean Taber stiffness value of 25 g-cm to 500 g-cm.

*MPC in a Secondary Layer of Paperboard Basecoat*

Handsheets consisting of a primary layer containing softwood pulp, and a secondary layer containing softwood pulp and a different amount of MPC particles were made using the dynamic sheet former (DSF). The DSF sheet containing solely softwood pulp in the secondary layer (0% MPC) was used as a control. MPC particles were added two the secondary layer at 2.5% and 5% weight of total secondary layer, which correlated to 6.8 and 13.6kg/m$^2$ (1.4, and 2.8 lb/1,000 ft$^2$, respectively). The obtained DSF handsheets containing different levels of MPC particles were evaluated for porosity, opacity, tensile strength, and smoothness.

*(i) Porosity Property*

The porosity of the DSF sheets was measured using Gurley porosity, according to the TAPPI method T 460 om-96. Gurley porosity (in sec) measures the time required for air to permeate through the DSF sheet. An increase in Gurley porosity value indicates the reduction of air permeability through the sheet due to the decrease in sheet porosity. (TABLE 1)

TABLE I

| COMPOSITION OF THE SECONDARY LAYER | | | PROPERTIES | | | |
|---|---|---|---|---|---|---|
| % Softwood | % MPC | MPC in the 2nd layer Kg/m$^2$ (lb/1,000 ft$^2$) | Apparent Density (g/cm$^3$) | Cal. (mil) | B.W. kg/msf (lbs/MSF) | Gurley Porosity (sec) |
| 100% | 0% | 0 (0) | 0.62 | 16.1 | 27.2 (60) | 140 |
| 97.5% | 2.5% | 6.8 (1.4) | 0.68 | 14.6 | 26.3 (58) | 210 |
| 95% | 5% | 13.6 (2.8) | 0.70 | 14.1 | 25.9 (57) | 790 |

The DSF sheet containing 5% MPC particles in the secondary layer (13.6kg/m$^2$) (2.8 lb/1,000 ft$^2$) showed more than 5 times reduction in board porosity, indicated by the increase of Gurley porosity from 140 sec for the DSF sheet containing no MPC particle to 790 sec for the sheet containing MPC particles at 13.6kg/m$^2$ (2.8 lb/1,000 ft$^2$). (TABLE I)

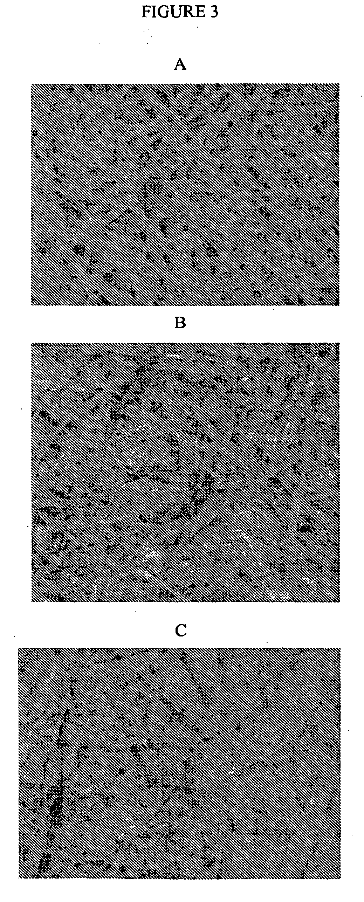

When applied in the secondary layer of the DSF sheet, MPC particles filled the fiber voids and formed a very smooth layer on the treated sheet surface. (FIG. 3) As a result, the MPC surface-modified board had an improved surface smoothness, higher opacity and brightness at lower coat weights compared to non-MPC modified board.

*(ii) Opacity Property*

For opacity property, the DSF handsheets containing different levels of MPC particles in the secondary layer were calendered at a pressure of 20 bars and a temperature of 51.7°C (125°F), followed by topcoating with a pigment coating formulation containing about 80% clay based on total solid weight. The pigment coating was applied to the board surface using wire-wound rods No. 5 and No. 12. The brightness of DSF sheet was measured using a Brightimeter Micro S-5 manufactured by the Technidyne Corporation. The DSF sheet having only a basecoat was used as a control. (TABLE II)

TABLE II

| Coating Application | Base Coat kg/m$^2$ (lb/1,000 ft$^2$) | MPC kg/m$^2$ (lb/1,000 ft$^2$) | Brightness |
|---|---|---|---|
| #5 wire-wound rod | 44 (9) | 0 (0) | 56 |
| | 34 (7) | 6.8 (1.4) | 58 |
| | 20(4) | 13.7 (2.8) | 58 |
| #12 wire-wound rod | 44 (9) | 0 (0) | 58 |
| | 39 (8) | 6.8 (1.4) | 61 |
| | 29 (6) | 13.7 (2.8) | 66 |

When MPC particles were added to the secondary layer of DSF sheet, the brightness of the coated sheet increased compared to that of the control, even at the reduced coating level. When MPC particles were used in the secondary layer, MPC filled the surface voids of the softwood base layer, thus improving the coating performance.

*(iii) Tensile Strength Property*

The tensile properties of the DSF handsheets containing different levels of MPC particles in the secondary layer were tested in the MD and CD directions.

The MD: CD ratio ranged from 2.4 to 3.0 with no apparent effect from the type of secondary layer applied. The modulus increased significantly when MPC particles were applied as secondary layer. The addition of 7.5% MPC particles in the secondary layer of the sheet increased modulus from 4.26MPa to 5.55 MPa (617 to 806 Kpsi) (a 30% increase), indicating that the strength of sheet may be increased by an addition of MPC particles to the secondary layer of the sheet. (TABLE III)

TABLE III

| % MPC in Secondary Layer | Caliper (mm) | Load | | MD:CD Ratio (%) | Modulus | |
|---|---|---|---|---|---|---|
| | | MD N (lbf) | CD (lbf) | | MD MPa (Kpsi) | CD MPa (Kpsi) |
| 0 | 17.0 | 814 (183) | 276 (62) | 3.0 | 4.26 (617) | 2.01 (291) |
| 2.5 | 15.1 | 797 (179) | 303 (68) | 2.6 | 4.68 (678) | 2.34 (339) |
| 5.0 | 14.2 | 841 (189) | 280 (63) | 3.0 | 4.92 (713) | 2.28 (331) |
| 7.5 | 13.3 | 716 (161) | 294 (66) | 2.4 | 5.56 (806) | 2.79 (405) |
| 0 | 14.6 | 734 (165) | 276 (62) | 2.7 | 4.97 (720) | 2.21 (321) |
| 5.0 | 13.2 | 725 (163) | 240 (54) | 3.0 | 5.18 (751) | 2.57 (372) |

MPC may be blended with fiber pulps and added to the paperboard at the secondary headbox during a papermaking process.

*(i) Surface Analysis*

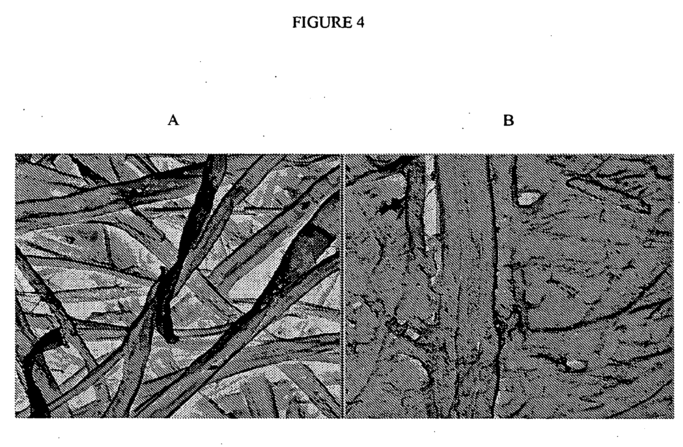

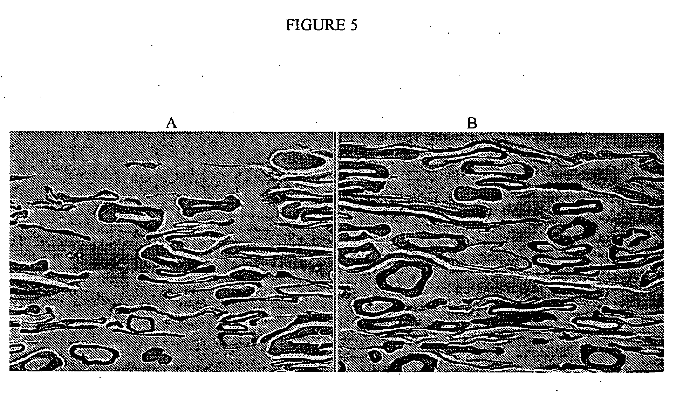

The SEM surface negative images and cross section negative images were taken for the paperboard having softwood base layer and the secondary layer containing wood pulps and MPC particles, in which MPC particles were added in a secondary headbox during the papermaking process (FIGs. 4 and 5). The SEM images confirm that MPC particles filled the fiber-to-fiber voids on the paperboard surface by forming a semi-continuous film on the surface. The thickness of MPC film formed on the paperboard surface was about 2 $\mu$m.

*(ii) Tensile Strength and Porosity*

The MPC-modified paperboard containing MPC particles about 1 lb/1,000 ft$^2$ had a 47% increase in tensile strength and a 33% increase in an elastic modulus compared to the paperboard containing no MPC particle. The porosity measurement showed about 10 times decrease in air permeability; from a Gurley porosity of only 4 sec/100 cc of air for the paperboard containing no MPC particle to about 42 sec/100 cc for the MPC-modified paperboard.

*Application of MPC at Different Positions of Papermaking Process*

MPC particles of the present disclosure may be applied to the paperboard at different stages in the wet end of papermaking process using several means of applications. They may be added in a secondary headbox of the papermaking process as a blend with hardwood fibers for the secondary layer or added solely (without hardwood fibers) to the softwood base layer. Furthermore, the disclosed MPC may be applied to the paperboard on the wet end or dry end of the papermaking process using typical paper coating equipments such as slot coating, curtain coater, and spray coating.

The smoothness of the $TiO_2$ topcoated- MPC basecoat paperboard was determined using a Parker Print Smoothness (PPS-10) according to the TAPPI method T 555 pm-94, wherein the lower PPS-10 numbers represent the higher smoothness of board. The brightness of paperboard was measured using a Brightimeter Micro S-5 manufactured by the Technidyne Corporation, wherein the brightness of board increases relative to the brightness value. (Table IV).

TABLE IV

| Means for MPC Addition | Addition of MPC | Smoothness PPS-10 | Brightness | Yellowness Index (b value) |
|---|---|---|---|---|
| Secondary Headbox (MPC added to hardwood fiber in secondary layer) | Blend with hardwood pulp for the secondary layer (20% MPC) | 5.71 | 77.88 | 0.61 |
| | Blend with hardwood pulp for the secondary layer (10% MPC) | 5.77 | 78.01 | 0.51 |
| | Control Hardwood pulp for the secondary layer (0% MPC) | 7.92 | 72.31 | 2.02 |
| Secondary Headbox | Apply solely as a secondary layer at 1lb/1,000ft$^2$ | 4.69 | 80.19 | -0.35 |
| | Control (0% MPC) | 10.96 | 65.45 | 3.65 |

(continued)

| Means for MPC Addition | Addition of MPC | Smoothness PPS-10 | Brightness | Yellowness Index (b value) |
|---|---|---|---|---|
| Spray Coating | Apply on the wet end to the base layer at 2.45g/m$^2$ (0.5 lb/1,000ft$^2$) | 5.53 | 81.07 | -0.05 |
| | Control (0% MPC) | 6.97 | 73.75 | 1.83 |
| Slot Coating | Apply on the wet end to the base layer at 4.89g/m$^2$ (1 lb/1,000ft$^2$) | 4.15 | 82.19 | -0.30 |
| | Control (0% MPC) | 7.37 | 74.75 | 1.01 |

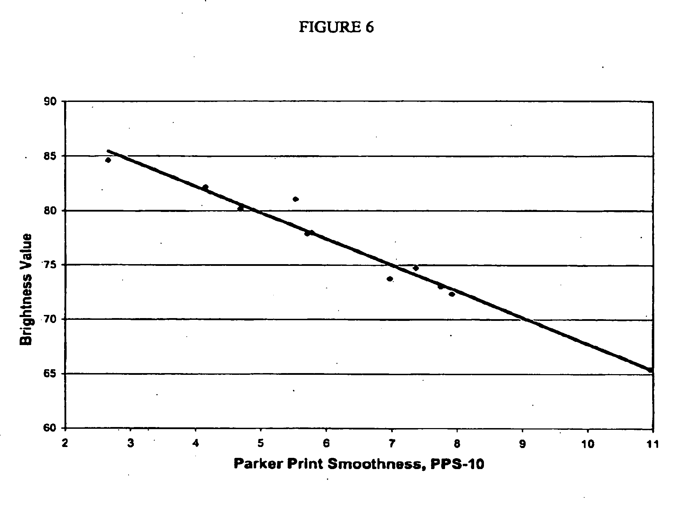

FIG. 6 shows the relationship between the brightness and smoothness of board. Additionally, the brightness and smoothness of the TiO$_2$ topcoat, MPC- modified paperboard of the present disclosure were compared to those of unbleached softwood base paperboard and those of coated board produced by coating the commercial base paperboard from the Mahrt Mill, MeadWestvaco Corp. with a top coat pigment.

The brightness property of the TiO$_2$ topcoat, MPC-modified paperboard was directly proportional to the smoothness of the board. This confirmed that MPC was retained as a thin film that filled fiber-to-fiber voids on the unbleached fiber surface of board, as shown in the SEM images FIG. 4 even when it was added on the wet end with backside vacuum and in highly dilute feed conditions. The disclosed MPC exhibited a film-forming property on the cellulosic surface without any need for formulation with binder or rheology control agent. On the other hand, the microfibers of the known arts must be formulated with other ingredients such as binder and rheology control agent into stable colloidal before the addition to the paperboard. Under severe hydrodynamic conditions inherent in the papermaking process, the colloidal cellulosic microfibers of known arts tend to drain through the web without forming a flat film on the surface. The film-forming ability of the disclosed MPC on the fiber web surface allowed the addition of MPC using the existing equipment for the papermaking process, thus minimizing capital cost especially for an additional drying capacity.

The TiO$_2$ topcoated paperboard containing MPC of the present disclosure had higher opacity for hiding the unbleached brown board layer compared to the TiO$_2$ topcoated paperboard containing no MPC, as indicated by both brightness and yellowness optical values. These enhanced optical properties of the TiO$_2$ topcoated, MPC-modified paperboard was due to the smoothness improvement of board surface, as MPC filled the fiber voids and formed a thin film on the surface of fiber web base layer. Consequently, the amount of TiO$_2$ pigment required on the topcoat of paperboard to hide the unbleached brown fibers in the base layer, could be minimized when the disclosed MPC was present in the secondary layer of paperboard prior to the application of TiO$_2$ topcoat.

*Application of MPC through Size Press vs Surface Coating*

MPC was produced by wet grinding a suspension of bleached hardwood using a high-friction grinder. The produced MPC had a nominal volume average particle size of 50-80 μm and a water retention value of 25-40 ml/g dry fiber as determined by centrifuging a 50 ml of a 1.5% solution of MPC at a rotation speed of 3000 rpm for 15 min, using IEC CL2 Centrifuge with 50 ml swing out buckets with a radius of 150 mm that gave a relative centrifugal force of about 1500 g.

A suspension of the produced MPC at 2.7% solid was formulated with starch (Penford Gum 280 commercially available from Penford Products Co.) and clay (Kaobrite 90 commercially available from Thiele Kaolin Co.) at different compositions as in TABLE V.

For size press application, the formulations were applied to both sides of a 10 mil-bleached SBS paperboard using flooded nip size press having a 0.30m (12 inch) web at a speed of 1.02 m/s (200 ft/ minute) and a minimal press load of 241 kPa (35 psi).

For surface coating application, the formulations were applied on one side of a 10 mil-bleached SBS paperboard using bent blade applicator at a speed of 4.57m/s (900 ft/min).

Coat weights were calculated from the known ratios of MPC to starch to clay and measured ash content of the paperboards less the uncoated board. (TABLE V)

TABLE V

| Formulation | Total Solids % | Coat Weights kg/m² (lbs/3000 ft²) Press Applied Two Sides | | | Coat Weights kg/m² (lbss/3000 ft²) Blade Coated One Side | | |
|---|---|---|---|---|---|---|---|
| | | MPC | Starch | Clay | MPC | Starch | Clay |
| Water Only | | | | | | | |
| MPC 1% | 1 | 0.14 (0.085) | | | 0.081 (0.050) | | |
| Starch 8% | 8 | | 0.79 (0.487) | | | | |
| Starch 8%, clay 8% | 16 | | 1.81 (1.119) | 1.81 (1.119) | | 0.64 (0.397) | (0.64 (0.397) |
| Starch 8%, MPC 1% | 9 | 0.079 (0.049) | 0.7 (0.439) | | 0.065 (0.040) | 0.58 (0.357) | |
| MPC 1%, clay 8% | 9 | 0.164 (0.101) | | 1.32 (0.812) | 0.041 (0.025) | | 0.321 (0.198) |
| MPC 2.5%/clay 2.5% coprocessed ** | 5 | 0.256 (0.158) | | 0.26 (0.158) | 0.209 (0.129) | | 0.209 (0.129) |
| Starch 8%, clay 8%, UPC 1% | 17 | 0.293 (0.181) | 2.34 (1.445) | 2.34 (1.445) | 0.133 (0.082) | 1.06 (0.653) | 1.06 (0.653) |
| Starch 4%, clay 4%, MPC 1% | 9 | 0.212 (0.131) | 0.85 (0.525) | 0.85 (0.525) | 0.041 (0.025) | 0.160 (0.099) | 0.160 (0.099) |
| ** cellulose and clay wet milled together | | | | | | | |

The coated paperboards were calendered at two different pressures: 8.75 kN/m and 17.5kN/m (50 and 100 pli) pressure.

*(i) Taber Stiffness*

TABLE VI

| Formulation | Total Solids, % | Bending Stiffness Results Press Applied Two Sides Taber | | | Bending Stiffness Results Blade Coated One Side Taber | | |
|---|---|---|---|---|---|---|---|
| | | MD | CD | GM | MD | CD | GM |
| Water Only | | 31 | 11 | 18 | | | |
| MPC 1% | 1 | 37 | 11 | 20 | 34 | 17 | 24 |
| Starch 8% | 8 | 40 | 14 | 24 | | | |
| Starch 8%, clay 8% | 16 | 43 | 14 | 25 | 36 | 14 | 22 |
| Starch 8%, MPC 1% | 9 | 42 | 13 | 23 | 35 | 14 | 22 |
| MPC 1%, clay 8% | 9 | 44 | 14 | 25 | 38 | 15 | 24 |
| MPC 2.5%/ clay 2.5% coprocessed** | 5 | 38 | 12 | 21 | 37 | 12 | 21 |
| Starch 8%, clay 8%, MPC 1% | 17 | 45 | 16 | 27 | 39 | 18 | 26 |

(continued)

| Formulation | Total Solids, % | Bending Stiffness Results Press Applied Two Sides Taber | | | Bending Stiffness Results Blade Coated One Side Taber | | |
|---|---|---|---|---|---|---|---|
| | | MD | CD | GM | MD | CD | GM |
| Starch 4%, clay 4%, MPC 1% | 9 | 45 | 14 | 25 | 42 | 18 | 27 |
| **cellulose and clay wet milled together | | | | | | | |

The coated paperboards without calendering were tested for Taber Stiffness as shown in TABLE VI. The Taber stiffness was determined using the geometric mean (GM) of MD and CD stiffness according to a TAPPI test method T 489 om-04, revised version 2004. CM is a geometric mean of MD and CD Taber stiffness, wherein GM = (MD x CD)$^{1/2}$.

The Taber stiffness of coated paperboards calendering at two different levels was evaluated and compared to those of uncalendered, coated boards. (TABLE VII)

TABLE VII

| Formulation | Uncalendered | Calendered Sheets Press Applied Two Slides | | Uncalendered | Calendered Sheets Blade Coated One Slide | |
|---|---|---|---|---|---|---|
| | Bending Stiffness: MD-CD Geometric Mean | | | Bending Stiffness: MD-CD Geometric Mean | | |
| | 0kN/m (0 pli) | 8.75 kN/m (50 pli) | 17.5kN/m (100 pli) | 0 kN/m (0 pli) | 8.75 kN/m (50 pli) | 17.5 kN/m (100pli) |
| Water Only | 18 | 16 | 14 | | | |
| MPC 1% | 20 | | | 24 | 16 | 15 |
| Starch 8% | 24 | 20 | 18 | | | |
| Starch 8%, clay 8% | 25 | 19 | 18 | 22 | 18 | 17 |
| Starch 8%, MPC 1% | 23 | 20 | 19 | 22 | 17 | 14 |
| MPC 1%, clay 8% | 25 | 20 | 16 | 24 | 18 | 16 |
| MPC 2.5%/ clay 2.5% coprocessed * | 21 | 18 | 17 | 21 | 19 | 14 |
| Starch 8%, clay 8%, MPC 1% | 27 | 21 | 20 | 26 | 20 | 19 |
| Starch 4%, clay 40%, MPC 1% | 25 | 22 | 19 | 27 | 18 | 18 |

*(ii) Surface Smoothness*

Using a TAPPI test method T 538 om-01 (revised version 2001), the Sheffield surface smoothness of the calendered, coated paperboards was determined and compared to those of uncalendered, uncoated paperboards. (TABLE VIII)

TABLE VIII

| Formulation | Uncalendered Sheffield Smoothness 0kN/m (0 pli) | Calendered Sheets Press Applied Two Slides 8.75 kN/m (50 pli) | 17.5kN/m (100 pli) | Uncalendered Sheffield Smoothness kN/m (0 pli) | Calendered Sheets Blade Coated One Slide 8.75 kN/m (50 pli) | 17.5 kN/m (100pli) |
|---|---|---|---|---|---|---|
| Water Only | 400 | 157 | 108 | | | |
| MPC 1% | 410 | | | 400 | 135 | 122 |
| Starch 8% | 410 | 172 | 110 | | | |
| Starch 8% clay 8% | 410 | 217 | 157 | 410 | 162 | 98 |
| Starch 8% MPC 1% | 400 | 178 | 128 | 400 | 138 | 98 |
| MPC 1% clay 8% | 380 | 173 | 122 | 420 | 143 | 103 |
| MPC 2,5%/ clay 2.5% coprocessed * | 400 | 178 | 138 | 400 | 148 | 110 |
| Starch 8%, clay 8%, MPC 1% | 410 | 205 | 150 | 395 | 150 | 100 |
| Starch 4%, clay 4%, MPC 1% | 400 | 197 | 148 | 400 | 150 | 108 |

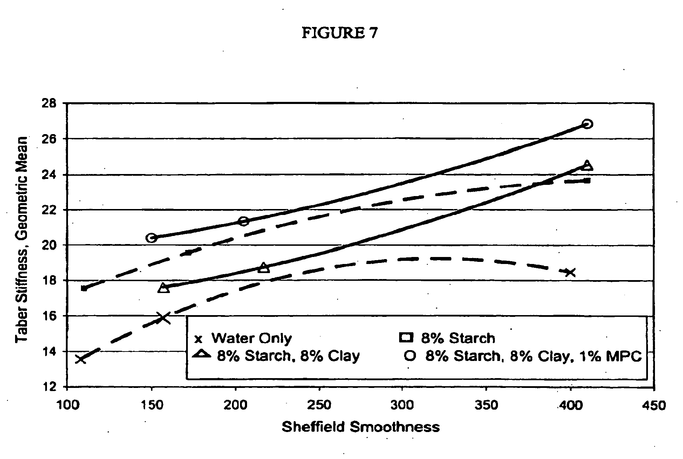

FIG. 7 shows the relationship between Taber stiffness and Sheffield surface smoothness of the paperboards having different sizing formulations applied at size process, without calendering and with calendering at 8.75kN/m and 17.5kN/m (50 and 100 pli) pressures.

When the coated paperboards were calendered, their surface smoothness improved while their bending stiffness deteriorated. The higher pressure level the board was calendered, the higher surface smoothness as indicated by a lower Sheffield Smoothness value, but the lower the bending stiffness property as indicated by a lower Taber Stiffness value.

TABLE IX

| Surface Sizing Formulation | Taber Stiffness for the Calendered Board having a Sheffield Smoothness of 100 | % Increase in Taber Stiffness Compared to Board Sized With Water Only |
|---|---|---|
| Water Only | 13.10 | - |
| 8% Starch | 17.14 | 31% |
| 8% Starch, 8% Clay | 16.91 | 29% |
| 1% MPC, 8% Starch, 8% Clay | 20.00 | 53% |

TABLE IX shows the Taber stiffness of paperboards having both surfaces sized with different formulations, after they were calendered to the same Sheffield Smoothness value of 100. The board surface sized with a formulation containing 1% MPC, 8% starch and 8% clay showed a Taber stiffness value of about 20, which was about a 53% increase from the Taber stiffness of paperboard without surface sizing (i.e., sized with water only) having a Taber stiffness of about 13.10. For paperboards surface sized with starch or a combination of starch with clay, their Taber stiffness improved compared to the paperboard without surface sizing) but the enhancement was only about 30%.

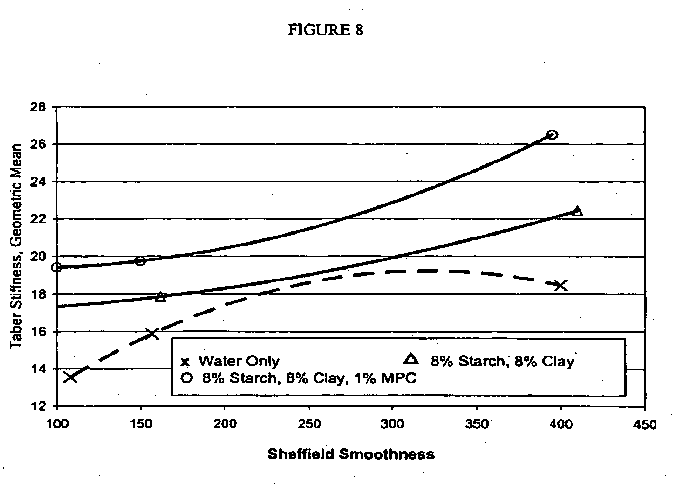

FIG. 8 shows the relationship between Taber stiffness and Sheffield surface smoothness of the paperboards blade-coated with different coating formulations without calendering and with calendering at 8.75 and 17.5kN/m (50 and 100 pli) pressure.

TABLE X

| Blade Coating Formulation | Taber Stiffness for the Calendered Board having a Sheffield Smoothness of 100 | % Increase in Taber Stiffness Compared to Board Coated With Water Only |
|---|---|---|
| Water Only | 13.10 | - |
| 8% Starch, 8% Clay | 17.46 | 34% |
| 1% MPC, 8% Starch, 8% Clay | 19.46 | 50% |

TABLE X shows the Taber stiffness of paperboards having one of the surfaces blade-coated with different formulations after being calendered to the same Sheffield Smoothness value of 100. The board blade-coated with a formulation containing 1% MPC, 8% starch and 8% clay showed a Taber stiff ness value of about 20, which was about a 50% increase from the Taber stiffness of paperboard blade-coated with only water having a Taber stiffness of about 13.10. For paperboards blade-coated with a formulation containing 8% starch and 8% clay, its Taber stiffness improved compared to the paperboard blade-coated with only water but the enhancement was only about 34%.

When paperboard is applied with a formulation containing the disclosed MPC either as a surface sizing agent or a coating, calendering may be performed to enhance surface smoothness of the treated paperboard with a significant reduction of a negative impact on bending stiffness performance.

It is to be understood that the foregoing description relates to embodiments that are exemplary and explanatory only and are not restrictive of the invention. Changes and modifications may be made therein as will be apparent to those skilled in the art, within the scope of the invention as defined in the following claims.

**Claims**

1. A paperboard including microplatelet cellulose particles positioned on at least one surface of the paperboard, wherein the microplatelet cellulose particles have a volume average particle size range of from 20 $\mu$m to 150 $\mu$m, a number average particle size range of from 5 $\mu$m to 20 $\mu$m, and a 95th percentile volume average particle size of no more than 300 $\mu$m.

2. The paperboard of claim 1, wherein the microplatelet cellulose particles has a water retention value in a range of from 5 ml/g to 80 ml/g.

3. The paperboard of claim 1 or claim 2, wherein the microplatelet cellulose particles are derived from fiber pulp selected from the group consisting of softwood fibers, hardwood fibers, cotton fibers, Esparto grass, bagasse, hemp, flax, sugar beet, citrus pulp, bleached kraft pulp, and combinations thereof.

4. The paperboard of claim 3, wherein the fiber pulp is pretreated with a process selected from the group consisting of chemical treatment, enzymatic treatment, mechanical treatment, and combination thereof.

5. The paperboard of any preceding claim, wherein the amount of the microplatelet cellulose particles is from 0.48g/m$^2$ to 97.6g/m$^2$ ( 0.10 lbs to 20 lbs per 1,000 ft$^2$) of the paperboard.

6. The paperboard of any preceding claim, wherein the amount range of the microplatelet cellulose particles is from 0.1% to 50%, based on total weight of the paperboard.

7. The paperboard of any preceding claim, **characterized by** a MD-CD geometric mean Taber stiffness value of 25 g-cm to 500 g-cm.

8. The paperboard of any preceding claim, further comprising an opacifying pigment selected from the group consisting of titanium dioxide, clay, calcium carbonate, aluminum trihydrate, amorphous silica, amorphous silicates, satin white, talc, zinc oxide, barium sulfate, high aspect ratio mineral fillers, and combinations thereof.

9. A packaging material, including the paperboard of any preceding claim.

10. A paperboard including:

   (10.i) a base paper; and
   (10.ii) at least one layer positioned on at least one surface of the base paper, wherein the layer comprises microplatelet cellulose particles having a volume average particle size range of from 20 $\mu$m to 150 $\mu$m, a number average particle size range of from 5 $\mu$m to 20 $\mu$m, and a 95th percentile volume average particle size of no more than 300 $\mu$m.

11. The paperboard of claim 10, wherein the base paper comprises a fiber selected from the group consisting of softwood fiber, hardwood fibers, recycled paper fibers, and combinations thereof.

12. The paperboard of claim 10, wherein an amount of the microplatelet cellulose particles in the layer (10.ii) is from 0.48g/m$^2$ to 97.6g/m$^2$ (0.10 lbs to 20 lbs per 1,000 ft$^2$) of the paperboard.

13. The paperboard of any of claims 10 to 12, wherein the amount range of the microplatelet cellulose particles in the layer (10.ii) is from 0.1% to 50%, based on total weight of the paperboard.

14. The paperboard of any of claims 10 to 13, **characterized by** a MD-CD geometric mean Taber stiffness value of 25 g-cm to 500 g-cm.

15. The paperboard of any of claims 10 to 14, further comprising an opacifying pigment selected from the group consisting of titanium dioxide, clay, calcium carbonate, aluminum trihydrate, amorphous silica, amorphous silicates, satin white, talc, zinc oxide, barium sulfate, high aspect ratio mineral fillers, and combinations thereof.

16. A paperboard comprising:

   (16.i) a base paper;
   (16.ii) at least one layer positioned on at least one surface of the base paper, wherein the layer includes microplatelet cellulose particles having a volume average particle size range of from 20 $\mu$m to 150 $\mu$m, a number average particle size range of from 5 $\mu$m to 20 $\mu$m, and a 95th percentile volume average particle size of no more than 300 $\mu$m; and
   (16.iii) a coating layer including an opacifying pigment, formed on a surface of the layer (16.ii).

17. The paperboard of claim 16, wherein the base paper comprises a fiber selected from the group consisting of softwood fiber, hardwood fibers, recycled paper fibers, and combinations thereof.

18. The paperboard of any of claims 16 to 18, wherein the amount of the microplatelet cellulose particles in the layer (16.ii) is from 0.48g/m$^2$ to 97.6g/m$^2$ (0.10 lbs to 20 lbs per 1,000 ft$^2$) of the paperboard.

19. The paperboard of any of claims 16 to 18, wherein the amount of the microplatelet cellulose particles in the layer (16.ii) is from 0.1% to 50%, based on total weight of the paperboard.

20. The paperboard of any of claims 16 to 19, **characterized by** a MD-CD geometric mean Taber stiffness value of 25 g-cm to 500 g-cm.

21. The paperboard of any of claims 16 to 20, wherein the opacifying pigment in the coating layer (16.iii) is selected from the group consisting of titanium dioxide, clay, calcium carbonate, aluminum trihydrate, amorphous silica, amorphous silicates, satin white, talc, zinc oxide, barium sulfate, high aspect ratio mineral fillers, and combinations thereof.

22. A coating composition comprising microplate let cellulose particles, wherein the microplatelet cellulose particles have a volume average particle size range of from 20$\mu$ m to 150 $\mu$m, a number average particle size range of from 5 $\mu$m to 20 $\mu$m, and wherein 95% of the microplate let cellulose particles have a volume average particle size range of from 50 $\mu$m to 300 $\mu$m.

23. The composition of claim 22, further comprising an opacifying pigment selected from the group consisting of titanium dioxide, clay, calcium carbonate, aluminum trihydrate, amorphous silica, amorphous silicates, satin white, talc, zinc oxide, barium sulfate, high aspect ratio mineral fillers, and combinations thereof.

24. The composition of claim 22 or claim 23, further comprising at least one member selected from the group consisting of crosslinker, coalescence agent, plasticizer, buffers, neutralizers, thickeners, rheology modifiers, humectants, wetting agents, biocides, plasticizers, antifoaming agents, colorants, fillers, waxes, and combinations thereof.

**Patentansprüche**

1. Pappe, einschließlich Cellulosemikroplättchenpartikel, die auf wenigstens einer Oberfläche der Pappe positioniert sind, wobei die Cellulosemikroplättchenpartikel im Volumendurchschnitt einen Partikelgrößenbereich von 20 $\mu$m bis 150 $\mu$m, im Anzahldurchschnitt einen Partikelgrößenbereich von 5 $\mu$m bis 20 $\mu$m und im 95%-Volumendurchschnitt eine Partikelgröße von nicht mehr als 300 $\mu$m aufweisen.

2. Pappe nach Anspruch 1, wobei die Cellulosemikroplättchenpartikel einen Wasserretentionswert in einem Bereich von 5 ml/g bis 80 ml/g aufweisen.

3. Pappe nach Anspruch 1 oder Anspruch 2, wobei die Cellulosemikroplättchenpartikel aus Faserzellstoff hergestellt sind, ausgewählt aus der Gruppe, bestehend aus Weichholzfasern, Hartholzfasern, Baumwollfasern, Espartogras, Bagasse, Hanf, Flachs, Zuckerrübe, Zitruszellstoff, gebleichter Kraftzellstoff und Kombinationen davon.

4. Pappe nach Anspruch 3, wobei der Faserzellstoff mit einem Prozess vorbehandelt wird, der aus der Gruppe ausgewählt ist, bestehend aus einer chemischen Behandlung, einer enzymatischen Behandlung, einer mechanischen Behandlung und Kombinationen davon.

5. Pappe nach einem der vorhergehenden Ansprüche, wobei die Menge der Cellulosemikroplättchenpartikel von 0,48 g/m$^2$ bis 97,6 g/m$^2$ (0,10 Pfund bis 20 Pfund pro 1000 Quadratfuß) der Pappe beträgt.

6. Pappe nach einem der vorhergehenden Ansprüche, wobei der Mengenbereich der Cellulosemikroplättchenpartikel von 0,1% bis 50% auf der Grundlage des Gesamtgewichts der Pappe beträgt.

7. Pappe nach einem der vorhergehenden Ansprüche, **gekennzeichnet durch** ein MD-CD-geometrisches Mittel des Taberfestigkeitswerts von 25 g-cm bis 500 g-cm.

8. Pappe nach einem der vorhergehenden Ansprüche, ferner umfassend ein opazitätsförderndes Pigment, ausgewählt aus der Gruppe, bestehend aus Titaniumdioxid, Tonerde, Calciumcarbonat, Aluminiumtrihydrat, amorphe Kieselerden, amorphe Silicate, Satinweiß, Talk, Zinkoxid, Bariumsulfat, Mineralfüllstoffe mit hohem Aspektverhältnis und Kombinationen davon.

9. Verpackungsmaterial, einschließlich der Pappe nach einem der vorhergehenden Ansprüche.

10. Pappe, einschließlich:

    ein Grundpapier; und
    wenigstens eine Lage, die auf wenigstens einer Oberfläche des Grundpapiers positioniert ist, wobei die Lage Cellulosemikroplättchenpartikel mit einem Partikelgrößenbereich im Volumendurchschnitt von 20 $\mu$m bis 150 $\mu$m, einem Partikelgrößenbereich im Anzahldurchschnitt von 5 $\mu$m bis 20 $\mu$m und einer Partikelgröße im 95%-Volumendurchschnitt von nicht mehr als 300 $\mu$m aufweist.

11. Pappe nach Anspruch 10, wobei das Grundpapier eine Faser umfasst, ausgewählt aus der Gruppe, bestehend aus Weichholzfasern, Hartholzfasern, Recycling-Papierfasern und Kombinationen davon.

12. Pappe nach Anspruch 10, wobei die Menge der Cellulosemikroplättchenpartikel von 0,48 g/m$^2$ bis 97,6 g/m$^2$ (0,10 Pfund bis 20 Pfund pro 1000 Quadratfuß) der Pappe beträgt.

13. Pappe nach einem der Ansprüche 10 bis 12, wobei der Mengenbereich der Cellulosemikroplättchenpartikel in der Lage von 0,1% bis 50% auf der Grundlage des Gesamtgewichts der Pappe beträgt.

14. Pappe nach einem der Ansprüche 10 bis 13, **gekennzeichnet durch** ein MD-CD-geometrisches Mittel des Taberfestigkeitswerts von 25 g-cm bis 500 g-cm.

**15.** Pappe nach einem der Ansprüche 10 bis 14, ferner umfassend ein opazitätsförderndes Pigment, ausgewählt aus der Gruppe, bestehend aus Titaniumdioxid, Tonerde, Calciumcarbonat, Aluminiumtrihydrat, amorphe Kieselerden, amorphe Silicate, Satinweiß, Talk, Zinkoxid, Bariumsulfat, Mineralfüllstoffe mit hohem Aspektverhältnis und Kombinationen davon.

**16.** Pappe, umfassend:

ein Grundpapier;
wenigstens eine Lage, die auf wenigstens einer Oberfläche des Grundpapiers positioniert ist, wobei die Lage Cellulosemikroplättchenpartikel umfasst, die im Volumendurchschnitt einen Partikelgrößenbereich von 20 $\mu$m bis 150 $\mu$m, im Anzahldurchschnitt einen Partikelgrößenbereich von 5 $\mu$m bis 20 $\mu$m und im 95%-Volumendurchschnitt eine Partikelgröße von nicht mehr als 300 $\mu$m aufweisen; und
eine Beschichtungslage, einschließlich eines opazitätfördernden Pigments, die auf einer Oberfläche der Lage ausgebildet ist.

**17.** Pappe nach Anspruch 16, wobei das Grundpapier eine Faser umfasst, ausgewählt aus der Gruppe, bestehend aus Weichholzfasern, Hartholzfasern, Recycling-Papierfasern und Kombinationen davon.

**18.** Pappe nach einem der Ansprüche 16 bis 18, wobei die Menge der Cellulosemikroplättchenpartikel in der Lage von 0,48 g/m$^2$ bis 97,6 g/m$^2$ (0,10 Pfund bis 20 Pfund pro 1000 Quadratfuß) der Pappe beträgt.

**19.** Pappe nach einem der Ansprüche 16 bis 18, wobei die Menge der Cellulosemikroplättchenpartikel in der Lage von 0,1% bis 50% auf der Grundlage des Gesamtgewichts der Pappe beträgt.

**20.** Pappe nach einem der Ansprüche 16 bis 19, **gekennzeichnet durch** ein MD-CD-geometrisches Mittel des Taberfestigkeitswerts von 25 g-cm bis 500 g-cm.

**21.** Pappe nach einem der Ansprüche 16 bis 20, wobei das opazitätsfördernde Pigment in der Beschichtungslage aus der Gruppe ausgewählt ist, bestehend aus Titaniumdioxid, Tonerde, Calciumcarbonat, Aluminiumtrihydrat, amorphe Kieselerden, amorphe Silicate, Satinweiß, Talk, Zinkoxid, Bariumsulfat, Mineralfüllstoffe mit hohem Aspektverhältnis und Kombinationen davon.

**22.** Beschichtungszusammensetzung, umfassend Cellulosemikroplättchenpartikel, wobei die Cellulosemikroplättchenpartikel im Volumendurchschnitt einen Partikelgrößenbereich von 20 $\mu$m bis 150 $\mu$m und im Anzahldurchschnitt einen Partikelgrößenbereich von 5 $\mu$m bis 20 $\mu$m aufweisen und wobei 95% der Cellulosemikroplättchenpartikel im Volumendurchschnitt einen Partikelgrößenbereich von 50 $\mu$m bis 300 $\mu$m aufweisen.

**23.** Zusammensetzung nach Anspruch 22, ferner umfassend ein opazitätsförderndes Pigment, ausgewählt aus der Gruppe, bestehend aus Titaniumdioxid, Tonerde, Calciumcarbonat, Aluminiumtrihydrat, amorphe Kieselerden, amorphe Silicate, Satinweiß, Talk, Zinkoxid, Bariumsulfat, Mineralfüllstoffe mit hohem Aspektverhältnis und Kombinationen davon.

**24.** Zusammensetzung nach Anspruch 22 oder Anspruch 23, ferner umfassend wenigstens ein Element, ausgewählt aus der Gruppe, bestehend aus einem Quervernetzer, einem Vereinigungsmittel, einem Plastifizierungsmittel, Puffern, Neutralisierungsmitteln, Verdickungsmitteln, Fließeigenschaftsmodifizierungsmittel, Feuchthaltemittel, Anfeuchtmittel, Pestizide, Plastifizierungsmittel, Antischaummittel, Farbstoffe, Füllmittel, Wachse und Kombinationen davon.

**Revendications**

**1.** Carton renfermant des particules de cellulose en microlamelles positionnées sur au moins une surface du carton, dans lequel les particules de cellulose en microlamelles présentent une taille de particule moyenne en volume de 20 $\mu$m à 150 $\mu$m, une taille de particule moyenne en nombre de 5 $\mu$m à 20 $\mu$m, et une taille de particule moyenne en volume correspondant au 95$^{ème}$ percentile qui n'est pas supérieure à 300 $\mu$m.

**2.** Carton selon la revendication 1, dans lequel les particules de cellulose en microlamelles présentent une valeur de rétention d'eau se situant dans la plage de 5 ml/g à 80 ml/g.

**3.** Carton selon la revendication 1 ou la revendication 2, dans lequel les particules de cellulose en microlamelles sont dérivées de la pâte de fibres choisie dans le groupe constitué par les fibres de bois tendre, les fibres de bois dur, les fibres de coton, l'alfa, la bagasse, le chanvre, le lin, la betterave à sucre, la pulpe d'agrumes, la pâte kraft blanchie, et leurs combinaisons.

**4.** Carton selon la revendication 3, dans lequel la pâte de fibres est prétraitée avec un procédé choisi dans le groupe comprenant le traitement chimique, le traitement enzymatique, le traitement mécanique, et leur combinaison.

**5.** Carton selon l'une quelconque des revendications précédentes, dans lequel la quantité des particules de cellulose en microlamelles varie de 0,48g/m$^2$ à 97,6g/m$^2$ (de 0,10 lbs à 20 lbs par 1,000 ft$^2$) du carton.

**6.** Carton selon l'une quelconque des revendications précédentes, dans lequel la quantité des particules de cellulose en microlamelles varie de 0,1% à 50%, en fonction du poids total du carton.

**7.** Carton selon l'une quelconque des revendications précédentes, **caractérisé par** une valeur moyenne géométrique pour le ratio MD/CD de la dureté Taber qui varie de 25 g/cm à 500 g/cm.

**8.** Carton selon l'une quelconque des revendications précédentes, comportant en outre un pigment opacifiant choisi dans le groupe constitué par le dioxyde de titane, l'argile, le carbonate de calcium, le trihydrate d'aluminium, la silice amorphe, les silicates amorphes, le blanc satiné, le talc, l'oxyde de zinc, le sulfate de baryum, les charges minérales à rapport de forme élevé, et leurs combinaisons.

**9.** Matériau d'emballage comprenant le carton selon l'une quelconque des revendications précédentes.

**10.** Carton présentant:

(10.i) un papier de base; et
(10.ii) au moins une couche disposée sur au moins une surface du papier de base, dans lequel la couche comprend des particules de cellulose en microlamelles présentant une taille de particule moyenne en volume de 20 μm à 150 μm, une taille de particule moyenne en nombre de 5 μm à 20 μm, et une taille de particule moyenne en volume correspondant au 95$^{ème}$ percentile qui n'est pas supérieure à 300 μm.

**11.** Carton selon la revendication 10, dans lequel le papier de base comprend une fibre choisie dans le groupe constitué par la fibre de bois tendre, les fibres de bois dur, les fibres de papier recyclé et leurs combinaisons.

**12.** Carton selon la revendication 10, dans lequel une quantité de particules de cellulose en microlamelles dans la couche (10.ii) varie de 0,48 g/m$^2$ à 97,6 g/m$^2$ (de 0,10 lbs à 20 lbs par 1.000 ft$^2$) du carton.

**13.** Carton selon l'une quelconque des revendications 10 à 12, dans lequel la quantité des particules de cellulose en microlamelles dans la couche (10.ii) varie de 0,1% à 50% en fonction du poids total du carton.

**14.** Carton selon l'une quelconque des revendications 10 à 13, **caractérisé par** une valeur moyenne géométrique pour le ratio MD/CD de la dureté Taber qui varie de 25 g-cm à 500 g-cm.

**15.** Carton selon l'une quelconque des revendications 10 à 14, comportant en outre un pigment opacifiant sélectionné dans le groupe constitué par le dioxyde de titane, l'argile, le carbonate de calcium, le trihydrate d'aluminium, la silice amorphe, les silicates amorphes, le blanc satiné, le talc, l'oxyde de zinc, le sulfate de baryum, les charges minérales à rapport de forme élevé, et leurs combinaisons.

**16.** Carton présentant:

(16.i) un papier de base;
(16.ii) au moins une couche disposée sur au moins une surface du papier de base, où la couche comprend des particules de cellulose en microlamelles présentant une taille de particule moyenne en volume de 20 μm à 150 μm, une taille de particule moyenne en nombre de 5 μm à 20 μm, et une taille de particule moyenne en volume correspondant au 95$^{ème}$ percentile qui n'est pas supérieure à 300 μm ; et
(16.iii) une couche de revêtement comportant un pigment opacifiant formée sur une surface de la couche (16.ii).

**17.** Carton selon la revendication 16, dans lequel le papier de base comprend une fibre sélectionnée dans le groupe constitué par la fibre de bois tendre, les fibres de bois dur, les fibres de papier recyclé et leurs combinaisons.

**18.** Carton selon l'une quelconque des revendications 16 à 18, dans lequel la quantité des particules de cellulose en microlamelles dans la couche (16.ii) varie de 0,48 g/m$^2$ à 97,6 g/m$^2$ (de 0,10 lbs à 20 lbs par 1.000 ft$^2$) du carton.

**19.** Carton selon l'une quelconque des revendications 16 à 18, dans lequel la quantité des particules de cellulose en microlamelles dans la couche (16.ii) varie de 0,1% à 50% en fonction du poids total du carton.

**20.** Carton selon l'une quelconque des revendications 16 à 19, **caractérisé par** une valeur moyenne géométrique pour le ratio MD/CD de la dureté Taber qui varie de 25 g-cm à 500 g-cm.

**21.** Carton selon l'une quelconque des revendications 16 à 20, dans lequel le pigment opacifiant dans la couche de revêtement (16.iii) est sélectionné dans le groupe constitué par le dioxyde de titane, l'argile, le carbonate de calcium, le trihydrate d'aluminium, la silice amorphe, les silicates amorphes, le blanc satiné, le talc, l'oxyde de zinc, le sulfate de baryum, les charges minérales à rapport de forme élevé, et leurs combinaisons.

**22.** Composition de revêtement contenant des particules de cellulose en microlamelles, dans laquelle les particules de cellulose en microlamelles présentent une taille de particule moyenne en volume de 20 $\mu$m à 150 $\mu$m, une taille de particule moyenne en nombre de 5 $\mu$m à 20 $\mu$m, et dans laquelle 95% des particules de cellulose en microlamelles présentent une taille de particule moyenne en volume qui varie de 50 $\mu$m à 300 $\mu$m.

**23.** Composition selon la revendication 22, comprenant en outre un pigment opacifiant sélectionné dans le groupe constitué par le dioxyde de titane, l'argile, le carbonate de calcium, le trihydrate d'aluminium, la silice amorphe, les silicates amorphes, le blanc satiné, le talc, l'oxyde de zinc, le sulfate de baryum, les charges minérales à rapport de forme élevé, et leurs combinaisons.

**24.** Composition selon la revendication 22 ou la revendication 23, comprenant en outre au moins un élément sélectionné dans le groupe constitué par un agent de réticulation, un agent de coalescence, un plastifiant, des tampons, des neutralisants, des épaississants, des modificateurs de rhéologie, des humectants, des agents mouillants, des biocides, des plastifiants, des agents antimoussants, des colorants, des charges, des cires, et leurs combinaisons.

FIGURE 1

FIGURE 2

FIGURE 3

A

B

C

FIGURE 4

A                                                    B

FIGURE 5

FIGURE 6

FIGURE 7

FIGURE 8

**EP 1 945 855 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6645616 B
- US 20030091762 A
- US 20050039871 A
- US 20060065379 A
- US 2004086626 A
- US 4888092 A
- US 2004223040 A
- US 7037405 B
- US 2005239744 A
- US 2006034837 W
- WO 2004055267 W
- US 4861427 A
- US 5637197 A
- US 4474949 A
- JP 2004230719 A
- US 6322667 B